# EUROPEAN PATENT SPECIFICATION

(11) **EP 3 815 540 B1**
(45) Date of publication and mention of the grant of the patent: **25.03.2026**
(21) Application number: 19824548.2
(22) Date of filing: 28.06.2019
(51) Int. Cl.: A23L 27/30, A23P 10/40, A23L 29/30, A23L 33/20

(54) **SWEETENER POWDER COMPOSITION AND PREPARATION METHOD THEREFOR**
SÜSSSTOFFPULVERZUSAMMENSETZUNG UND VERFAHREN ZU IHRER HERSTELLUNG
COMPOSITION DE POUDRE D'ÉDULCORANT ET SON PROCÉDÉ DE PRÉPARATION

(30) Priority: 28.06.2018 KR 20180075049; 10.08.2018 KR 20180093974
(43) Date of publication of application: 05.05.2021
(73) Proprietor: Samyang Corporation, Seoul 03129 (KR)
(72) Inventor: KIM, Go-Eun, Gwangju-si Gyeonggi-do 12777 (KR); LIM, Hye Jin, Suwon-si Gyeonggi-do 16506 (KR); PARK, Sung Won, Seoul 07691 (KR); PARK, Ji Won, Seongnam-si, Gyeonggi-do 13583 (KR); HAN, Tae-Chul, Yongin-si, Gyeonggi-do 17081 (KR); CHOI, Eunsoo, Seongnam-si, Gyeonggi-do 13588 (KR); RYU, Kyung-Hun, Seongnam-si Gyeonggi-do 13127 (KR); YANG, Jae-Kyung, Hwaseong-si, Gyeonggi-do 18445 (KR); PARK, Chong Jin, Seoul 06501 (KR)
(74) Representative: Schön, Christoph
(86) International application number: PCT/KR2019/007910
(87) International publication number: WO 2020/005021

(56) References cited:
- WO-A1-2012/042229
- WO-A1-2015/075473
- WO-A1-2017/029244
- WO-A1-2017/093309
- WO-A1-2018/138666
- WO-A1-2020/005022
- KR-A- 20150 130 323
- KR-A- 20170 009 894
- KR-A- 20170 132 151
- KR-A- 20180 035 413
- KR-A- 20180 046 853
- KR-B1- 101 766 430
- US-A1- 2016 213 036
- US-A1- 2018 092 394
- ORFORD P D ET AL: "Effect of water as a diluent on the glass transition behaviour of malto-oligosaccharides, amylose and amylopectin", INTERNATIONAL JOURNAL OF BIOLOGICAL MACROMOLECULES, ELSEVIER BV, NL, vol. 11, no. 2, 1 April 1989 (1989-04-01), pages 91 - 96, XP022906991, ISSN: 0141-8130, [retrieved on 19890401], DOI: 10.1016/0141-8130(89)90048-2
- SICCAMA JOANNE W. ET AL: "Steering the formation of cellobiose and oligosaccharides during enzymatic hydrolysis of asparagus fibre", LWT- FOOD SCIENCE AND TECHNOLOGY, vol. 160, 1 April 2022 (2022-04-01), United Kingdom, pages 113273, XP093212271, ISSN: 0023-6438, Retrieved from the Internet <URL:https://pdf.sciencedirectassets.com/272383/1-s2.0-S0023643822X00054/1-s2.0-S0023643822002080/main.pdf?X-Amz-Security-Token=IQoJb3JpZ2luX2VjENT//////////wEaCXVzLWVhc3QtMSJIMEYCIQDns91uDEvGABcWlNm+C0y3xYGsIomwfe+tNrvW+gE8LwIhAIwuo7TrqEQ1o68g9tRy5NEm7BKdjA/oNvX/S5o2DINSKrMFCCwQBRoMMDU5MDAzNTQ2ODY1Igx3u> DOI: 10.1016/j.lwt.2022.113273

## Description

### [TECHNICAL FIELD]

The present disclosure relates to a sweetener powder composition as defined in the appended claims.

### [BACKGROUND ART]

Sugar is mainly composed of sucrose and is one of representative sweeteners that are added to foods to make them taste sweet. Sugar has excellent sweetness, and therefore it has been considered as the most preferable sweetener which is added to various foods and processed foods, etc. from the past and enhances the taste of food and increase the appetite. However, recently, as the harmfulness of sugar continues to be revealed, problems have been raised. Specifically, excessive intake of sugar is pointed out as a major cause of various lifestyle-related diseases such as obesity and diabetes as well as dental caries, and thus the necessity of developing sweeteners which can replace it has emerged all over the world.

Therefore, there is a continuous demand for the development of alternative sweeteners that are low in calories while having a sweetness level enough to replace sugar, and furthermore are more improved than a sweetener that blocks excessive intake of sugar, by simply inhibiting the absorption of sugars.

Recently, allulose is one of the most popular saccharides that can replace sugar, fructose or the like as a functional sweetener. Allulose is contained in a trace amount in molasses and isomerized sugar, and is a type of rare sugar that can be produced enzymatically by epimerase from D-fructose, and is expected to have physiological functions such as antioxidant properties. Moreover, despite the sweetness of the allulose reaches 60 to 70% of that of sugar, it has almost no calories and has excellent solubility, so it is expected to be applied to various foods.

The allulose can be prepared by performing a chemical method or a biological method, but due to the low content of allulose in the product, purification and concentration steps are required. However, in the case of concentrated syrup, it has a limitation in its application and thus, demand for crystals or powders is high, whereas allulose has a low crystallinity and thus, is hardly crystallized. Even when allulose is produced by a biological method using an allulose converting enzyme or a strain that produces the enzyme, the purity of allulose must be increased and then crystallized due to the low conversion rate. Therefore, when it is intended for industrial use of D-allulose, unsolved problems remain in the purification process, purification yield, crystallization yield, and the like.

In addition, when allulose is used as a food sweetener, allulose has a relatively lower sweetness than sugar, the amount of allulose used is increased in order to obtain a desired sweetness, and allulose has problems such as excessively high sense of richness or a slow rise in sweetness.
Patent document 1 (= WO 2017/029244 A1) discloses a powder comprising allulose, wherein the average particle size of the powder is within the range of not more than 5.0 mm, preferably within the range of (i) not more than 900 µm; (ii) from 900 µm to 2.0 mm; or (iii) from 2.0 mm to 5.0 mm, wherein the powder may further comprise a disaccharide selected from the group consisting of maltose, lactose and cellobiose.
Patent document 2 (= WO 2015/075473 A1) discloses a scoop-for-scoop sweetener comprising allulose, wherein the scoop-for-scoop sweetener has substantially the same sweetness per unit volume as sucrose and wherein the scoop-for-scoop sweetener comprises allulose, at least one bulking agent, and at least one high intensity sweetener and wherein the at least one bulking agent is selected from the group consisting of maltodextrin, polydextrose, gums, soluble corn fiber (SCF), starches, polyols, and mixtures thereof.
Patent document 3 (= WO 2018/138666 A1) which is a prior art document pursuant to Art. 54(3) EPC, discloses a low calorie, low glycemic index and sustained energy release brown sugar substitute composition comprising: a first sugar selected from a group comprising isomaltulose, trehalulose, D-allulose, isomaltulose-silicate, trehalulose-silicate, D-allulose-silicate; molasses or second sugar syrup; wherein the second sugar syrup is selected from a group comprising brown isomaltulose syrup, brown trehalulose syrup, and brown allulose syrup.

### [DETAILED DESCRIPTION OF THE INVENTION]

### [Technical Problem]

It is an object of the present disclosure to provide a sweetener powder composition containing a low-calorie allulose as defined in the appended claims, further disclosed but not part of the present invention is a preparation method thereof.

It is a further object of the present disclosure to provide an amorphous sweetener powder composition having sweetness degree and sweetness quality similar to sugar as defined in the appended claims, further disclosed but not part of the present invention is a preparation method thereof. The sweetener powder has excellent dissolution rate and thus, can be usefully used in a food composition in the form of being dissolved in a liquid and drunk.

### [Technical Solution]

An embodiment of the present disclosure relates to a sweetener powder composition comprising allulose and a powdering agent, wherein the powder is a spray-dried product and has a caloric energy of 2.0 kcal/g or less.

The powdering agent has a glass transition temperature of 60°C to 250°C in a powder state.

The glass transition temperature of the sweetener powder composition is 40°C to 150°C.

The powdering agent is one or more selected from the group consisting of dietary fiber and starch hydrolysate having a glass transition temperature of 60°C to 250°C.

Another embodiment of the present disclosure which is not part of the present invention relates to a method for preparing a sweetener powder composition comprising the steps of: preparing a liquid product containing allulose and a powdering agent, and spray-drying the liquid product to prepare a powder.

The sweetener powder composition according to one embodiment of the present disclosure can solve the problems that may occur during packaging, distribution, and long-term storage of powdered products. Further, it is possible to provide an allulose-containing sweetener powder composition with improved sweetness quality by compensating the problem of slowwer onset sweetness and the problem of bitter aftertaste (off-taste) that allulose has sensorily.

Hereinafter, the present disclosure will be described in more detail.

The sweetener powder composition according to the present disclosure includes allulose and a powdering agent, wherein the sweetener powder includes a spray-dried product of liquid product containing allulose and a powdered material as defined by the appended claims.

The solid content of the powdering agent, which is contained based on 100% by weight of the powdered sweetness composition according to the present disclosure, may be 40 to 99% by weight, 45 to 99% by weight, 50 to 99% by weight, 55 to 99% by weight, 60 to 99% by weight, 65 to 99% by weight, 67 to 99% by weight, 68 to 99% by weight, 70 to 99% by weight, 75 to 99% by weight, 80 to 99% by weight, 40 to 95% by weight, 45 to 95% by weight, 50 to 95% by weight, 55 to 95% by weight, 60 to 95% by weight, 65 to 95% by weight, 67 to 95% by weight, 68 to 95% by weight, 70 to 95% by weight, 75 to 95% by weight, 80 to 95% by weight, 40 to 90% by weight, 45 to 90% by weight, 50 to 90% by weight, 55 to 90% by weight, 60 to 90% by weight, 65 to 90% by weight, 67 to 90% by weight, 68 to 90% by weight, 70 to 90% by weight, 75 to 90% by weight, 80 to 90% by weight, 40 to 85% by weight, 45 to 85% by weight, 50 to 85% by weight, 55 to 85% by weight, 60 to 85% by weight, 65 to 85% by weight, 67 to 85% by weight, 68 to 85% by weight, 70 to 85% by weight, 75 to 85% by weight, 40 to 80% by weight, 45 to 80% by weight, 50 to 80% by weight, 55 to 80% by weight, 60 to 80% by weight, 40 to 75% by weight, 45 to 75% by weight, 50 to 75% by weight, 55 to 75% by weight, 60 to 75% by weight, 40 to 70% by weight, 45 to 70% by weight, 50 to 70% by weight, 55 to 70% by weight, or 60 to 70% by weight.

The solid content of allulose contained in the raw material solution for powdering or the sweetener powder in the present disclosure may be 1 to 30% by weight, 1 to 25% by weight, 1 to 20% by weight, 2 to 30% by weight, 2 to 25% by weight, 2 to 20% by weight, 5 to 30% by weight, 5 to 25% by weight, 5 to 20% by weight, 10 to 30% by weight, 10 to 25% by weight, 10 to 20% by weight, based on 100% by weight of the solid content of the raw material solution or powder.

The sweetener powder composition according to one embodiment of the present disclosure may include the powdering agent in an amount of more than 65 to 99% by weight, 67 to 99% by weight, 68 to 99% by weight, 70 to 99% by weight, 75 to 99% by weight, 80 to 99% by weight, more than 65 to 95% by weight, 67 to 95% by weight, 68 to 95% by weight, 70 to 95% by weight, 75 to 95% by weight, 80 to 95% by weight, more than 65 to 90% by weight, 67 to 90% by weight, 68 to 90% by weight, 70 to 90% by weight, 75 to 90% by weight, 80 to 90% by weight, more than 65 to 85% by weight, 67 to 85% by weight, 68 to 85% by weight, 70 to 85% by weight, 75 to 85% by weight, more than 65 to 80% by weight, 67 to 80% by weight, 68 to 80% by weight, 70 to 80% by weight, 75 to 80% by weight, more than 65 to 75% by weight, 67 to 75% by weight, 68 to 75% by weight, 70 to 75% by weight, or more than 65 to 70% by weight, based on 100% by weight of the solid content of the allulose and the powdering agent.

The sweetener powder composition according to one embodiment of the present disclosure may include the allulose and the powdering agent in a mixing ratio of 1:99 to 34:66, 1:99 to 33: 67, 1:99 to 32:68, 1:99 to 31:69, 1:99 to 30:70, 1:99 to 29:71, 1:99 to 28:72, 1:99 to 27:73, 1:99 to 26:74, 1:99 to 25:75, 1:99 to 20:80, 1:99 to 17:83, 5:95 to 34:66, 5:95 to 33: 67, 5:95 to 32:68, 5:95 to 31:69, 5:95 to 30:70, 5:95 to 29:71, 5:95 to 28:72, 5:95 to 27:73, 5:95 to 26:74, 5:95 to 25:75, 5:95 to 20:80, 5:95 to 17:83, 10:90 to 34:66, 10:90 to 33: 67, 10:90 to 32:68, 10:90 to 31:69, 10:90 to 30:70, 10:90 to 29:71, 10:90 to 28:72, 10:90 to 27:73, 10:90 to 26:74, 10:90 to 25:75, 10:90 to 20:80, 10:90 to 17:83, 15:85 to 34:66, 15:85 to 33: 67, 15:85 to 32:68, 15:85 to 31:69, 15:85 to 30:70, 15:85 to 29:71, 15:85 to 28:72, 15:85 to 27:73, 15:85 to 26:74, 15:85 to 25:75, 15:85 to 20:80, or 15:85 to 17:83, based on the weight of the solid content.

The sweetener powder composition includes a spray-dried product of a liquid product, the spray-dried product may have a water content of 10% by weight or less, 5% by weight or less, or 2% by weight or less. Further, in the sweetener powder composition, a recovery rate of the powder contained in the liquid product may be 80% or more or 90% or more.

The recovery rate refers to the weight% of the recovered spray-dried powder, based on 100 weight of the solid content of the liquid product, and the sweetener powder composition according to one embodiment of the present disclosure may have a recovery rate of 10% or more, 20% or more, 30% or more,40% or more, 45% or more, 50% or more, 60% or more, 70% or more, 75% or more, or 78% or more.

There is a demand for allulose crystals and powders, but it is very difficult to prepare powdered products from a liquid state by an other method than the crystallization method. Allulose can be prepared by performing a chemical method or a biological method, but due to the low content of allulose in the product, purification and concentration steps can be performed to increase the purity of allulose, therey crystallizing the allulose. Further, in the production of allulose, unresolved problems remain in the purification step, purification yield, crystallization yields, and the like.

In general, as the powder particles of saccharides are finer, the flowability is poorer. Thus, the convenience of use that occurs in the processing is reduced, and the high hygroscopic property of allulose makes it difficult to maintains a powdery state. The sweetener powder of the present disclosure has the advantage that the dispersibility and flowability are improved while being less affected by water, and thus, various types of packaging are available.

The powdering process is performed by spray-drying. Water evaporates under conditions of temperature and pressure at which water can evaporate, that is, under high temperature and vacuum (or reduced pressure) conditions to form amorphous powdery particles. The sweetener powder composition according to the present disclosure is a spray-dried product prepared by spray-drying a liquid product containing allulose and a powdering agent. As used herein, the spray-drying is a drying method in which a liquid product is sprayed with hot air and dispersed to rapidly evaporate water while being conveyed to the hot air, and dried to obtain a powder. For example, it may be a single-stage method or a multi-stage method. The multi-stage drying method means that drying is performed by dividing into two or more detailed steps, and for example, the multi-stage drying method may include two-stage or more drying steps, or three-stage drying steps, and the detailed steps may be performed by the same drying method or by a combination of different drying methods. As a specific example, when drying is performed by three detailed drying steps, it may include a first step where the liquid product is sprayed and dried, a second step where hot air blows up from the bottom of the spray-drying equipment and the spray-dried powder flows and thereby, the granules are dried, and a third step of drying and cooling by further introducing a dryer cooler.

Generally, materials used as a liquid product, which is raw material used for spray-drying, have a unique glass transition temperature (Tg) of the material itself. However, at the Tg value or higher, the material changes to a glass transition state, that is, a sticky and elastic softened state. Therefore, when drying is performed at a temperature equal to or higher than Tg value, the powder has a sticky property and thus, it is difficult to recover it as a dry powder. Therefore, especially in the spray-drying process, spray-drying must be performed at a temperature equal to or lower than the Tg value. Further, it is important to adjust the process parameters by setting the outlet temperature to a temperature equal to or lower than the Tg value so that water can evaporate. Generally, saccharides such as dextrin have higher Tg values as they contain more high molecular weight molecules, and thus, powdering is well performed at a high outlet temperature where water can evaporate easily in the spray-drying process. However, allulose has a sub-zero glass transition temperature (-5.5°C), and thus has a very low Tg value compared to other saccharides. In order to prepare a powdered allulose by the spray-drying process, when the internal temperature or the outlet temperature of the powdering device is set and dried to a temperature below the Tg value, water hardly evaporates at a temperature equal to or lower than the Tg value, and thus, drying is not properly performed. Therefore, it is very difficult for allulose to be powdered by a powdering process as a single component.

An embodiment of the present disclosure which is not part of the present invention provides a method capable of easily performing a spray-drying in which the glass transition temperature of a liquid product increases by mixing a powdering agent, in order to prepare an allulose-containing powder. The main factors affecting the glass transition temperature of the spray-dried product may be the DE value and the solid content of the raw material liquid product, the type of powdering agent, and the like.

The glass transition temperature of the powdering agent according to the present invention is 60 to 250°C, 62 to 250°C, 70 to 250°C, 80 to 250°C, 90 to 250°C, 60 to 240°C, 62 to 240°C, 70 to 240°C, 80 to 240°C, 90 to 240°C, 60 to 230°C, 62 to 230°C, 70 to 230°C, 80 to 230°C, 90 to 230°C, 60 to 220°C, 62 to 220°C, 70 to 220°C, 80 to 220°C, 90 to 220°C, 60 to 210°C, 62 to 210°C, 70 to 210°C, 80 to 210°C, 90 to 210°C, 60 to 200°C, 62 to 200°C, 70 to 200°C, 80 to 200°C, or 90 to 200°C.

The powdering agent used in the present disclosure is a starch hydrolysate or dietary fiber having a glass transition temperature of 60°C to 250°C, or 90°C to 250°C, and for example, may be one or more selected from the group consisting of dietary fiber, dextrin (e.g., DE 20 or less), and starch syrup having a glass transition temperature of 60°C to 250°C. The present disclosure provides a method for preparing amorphous particles with improved sweetness in which allulose and saccharides such as dextrin or water-soluble dietary fiber as a powdering agent are mixed to increases the Tg value and the mixture is spray-dried. The starch syrup may be a low-DE starch syrup having DE value of 30 or less, or 25 or less, for example, DE 20 to 25 or DE 20 to 24.

Examples of the dietary fiber may be one or more selected from the group consisting of indigestible maltodextrin, inulin and polydextrose, and the starch syrup may be starch syrup having a DE value of 25 or less. When dietary fiber is used as the powdering agent, the powdering agent containing dietary fiber may contain dietary fiber in an amount of 80% by weight or more, 85% by weight or more, 90% by weight or more, or 95% by weight or more.

As used herein, the term "dietary fiber" is an ingredient known as fiber or cellulose which is abundantly contained in vegetables, fruits, seaweeds and the like among foods, and refers to high molecular weight carbohydrates that are not digested by human digestive enzymes and are excreted outside the body. The dietary fiber may include cellulose, hemicellulose, lignin, or water-soluble dietary fiber, such as fruit pectin, vegetable gum, or seaweed polysaccharide, and the like, and may include polydextrose, low molecular weight alginic acid, indigestible maltodextrin or the like produced by a biotechnological method. Thus, the dietary fiber according to the present disclosure may be one or more selected from the group consisting of cellulose, hemicellulose, lignin, pectin, vegetable gums, seaweed polysaccharide, inulin, polydextrose, alginic acid, and indigestible maltodextrin.

The indigestible maltodextrin is rich in dietary fiber component and thus has effects such as smooth bowel movement, postprandial blood glucose level rise inhibition, and improvement of neutral fat in blood, and is highly utilized in health-oriented concept product as a raw material for health functional foods. However, when ingesting or using each of them singly due to a characteristic of a light powdery product, it is difficult to use as a sweetener because fine powder flying is so severe that it is difficult to handle, and it is low in sweetness.

The raw material solution for powdering may be provided with allulose in the form of allulose syrup. For example, the allulose syrup may contain 0.1 to 100% by weight of allulose, and examples thereof may be a low-purity allulose syrup containing 1 to 50% by weight, 3 to 35% by weight, 3 to 25% by weight or 3 to 20% by weight of allulose, or a high-purity allulose solution containing 70% by weight or more, 80% by weight or more, 85% by weight or more, 90% by weight or more, 95% by weight or more, 96% by weight or more, 97% by weight or more, or 99% by weight or more of allulose. The allulose syrup may have a viscosity of 2 cps to 200 cps at a temperature of 45°C, and an electrical conductivity of 1000 uS/cm or less, such as 0.01 to 1000 uS/cm, preferably 30 uS/cm or less, for example 0.1 to 30 uS/cm.

The allulose syrup can be obtained by subjecting a biologically obtained allulose-containing solution to a process including a primary ion purification, a SMB chromatography separation, a secondary ion purification, and a concentration step. Optionally, the allulose conversion reaction product may be subjected to an activated carbon treatment step, an ion purification step, or both an activated carbon treatment step and an ion purification step.

According to the present disclosure, by improving the sweetness degree and sweetness quality of a sweetener powder containing allulose and a powdering agent, a sweetener powder having a sweetness degree and sweetness quality similar to sugar can be obtained, and the sweetener powder may further include one or more selected from the group consisting of sugar and high-intensity sweeteners.

Allulose contained in the sweetener powder according to the present disclosure has a slightly low sweetness, and it is difficult to replace sweeteners such as sugar and fructose in the same manner. Therefore, in an attempt to achieve the sweetness degree equivalent to that of sugar, it is preferable to increase the sweetness degree by using a high-intensity sweetener. Specifically, allulose, which is the main raw material of the sweetener powder, is 70% of the sweetness level of sugar, and the indigestible maltodextrin, which is one of the powdering agent, is a level that can hardly feel the sweetness. Thus, due to the low sweetness of allulose which is a raw material saccharide, and the sweetness of the powdering agent to be added, the sweetness of the sweetener powder composition produced is further reduced.

It is necessary to improve the off-taste and off-flavor due to the powdering agent contained in the sweetener powder according to the present disclosure. For example, it is difficult to mask the unique starch taste and off-taste felt from indigestible maltodextrin. Although it is possible to increase the sweetness by the use of high-intensity sweeteners, it is not easy to achieve the sweetness quality at a level equivalent to that of sucrose.

The sweetener powder composition according to the present disclosure may further include a high-intensity sweetener. The content of the high-intensity sweetener used in the present disclosure may be 0.001 to 0.5 parts by weight, preferably 0.05 to 0.3 parts by weight based on 100 parts by weight of the total solid content of the saccharides including allulose and the powdering agent contained in the raw material liquid product or sweetener powder. The saccharide may include one or more from the group consisting of glucose, fructose, and sucrose, but is not limited thereto. The amount of sucrose contained in the powdered liquid product according to the present disclosure may be 0.1 to 10% by weight based on 100% by weight of the sweetener powder composition.

The high-intensity sweetener may be one or more selected from the group consisting of aspartame, acesulfame potassium, sodium cyclamate, sodium saccharin, sucralose, stevia sweetener (steviol glucosides, enzymatically modified stevia), dulcin, thaumatin, tomatine, neotame, rebaudioside and monellin.

The dextrose equivalent (DE) of the sweetener powder composition obtained according to the present disclosure or the liquid product for preparing the sweetener powder may have a DE value sufficient to be powdered. For example, it may have a DE value of less than 44. For example, the upper limit of the DE value of the liquid product for preparing the sweetener powder according to one embodiment of the present disclosure may be less than 44, 43 or less, 42 or less, 41 or less, 40 or less, 39 or less, 38 or less, 37 or less, or 36 or less, and the lower limit may be 1 or more, 2 or more, 3 or more, 4 or more, 5 or more, 6 or more, 7 or more, 8 or more, 9 or more, or 10 or more. For example, the DE value may be 10 to less than 44, or may be 20 to 40. The dextrose equivalent (DE) is a value expressed as a percentage of the content of the reducing sugar in the hydrolysate of a polysaccharide as compared with a pure glucose solution, and is used as a measure of the degree to which polysaccharides are hydrolyzed (especially starch to glucose), and in the case of fully hydrolyzed starch, the DE value is 100.

Therefore, the dextrose equivalent (DE) value of the powdering agent contained in the sweetener powder composition according to an embodiment of the present disclosure preferably has a DE value capable of supplementing the liquid allulose that cannot be powdered. For example, the DE may be 30 or less, 29 or less, 28 or less, 27 or less, 26 or less, 25 or less, 24 or less, 23 or less, 22 or less, 21 or less, or 20 or less.

The glass transition temperature of the sweetener powder composition according to the present disclosure is 40 to 150°C, 40 to 145°C, 40 to 140°C, 40 to 135°C, 45 to 150°C, 45 to 145°C, 45 to 140°C, 45 to 135°C, 50 to 150°C, 50 to 145°C, 50 to 140°C, 50 to 135°C, 55 to 150°C, 55 to 145°C, 55 to 140°C, 55 to 135°C, 60 to 150°C, 60 to 145°C, 60 to 140°C, 60 to 135°C, 65 to 150°C, 65 to 145°C, 65 to 140°C, 65 to 135°C, 70 to 150°C, 70 to 145°C, 70 to 140°C, 70 to 135°C, 75 to 150°C, 75 to 145°C, 75 to 140°C, 75 to 135°C, 80 to 150°C, 80 to 145°C, 80 to 140°C, 80 to 135°C, 85 to 150°C, 85 to 145°C, 85 to 140°C, 85 to 135°C, 90 to 150°C, 90 to 145°C, 90 to 140°C, 90 to 135°C, 95 to 150°C, 95 to 145°C, 95 to 140°C, 95 to 135°C, 100 to 150°C, 100 to 145°C, 100 to 140°C, 100 to 135°C, 104 to 150°C, 104 to 145°C, 104 to 140°C, 104 to 135°C, 105 to 150°C, 105 to 145°C, 105 to 140°C, 105 to 135°C, 110 to 150°C, 110 to 145°C, 110 to 140°C, 110 to 135°C, 120 to 150°C, 120 to 145°C, 120 to 140°C, 120 to 135°C, 130 to 150°C, 130 to 145°C, 130 to 140°C, or 130 to 135°C.

The dissolution rate of the sweetener powder composition according to one embodiment of the present disclosure in water may be more than 1 time, 1.1 times or more, 1.2 times or more, 1.3 times or more, 1.4 times or more, 1.5 times or more, 1.7 times or more, 1.75 times or more, 2 times or more, 3 times or more, 4 times or more, or 5 times or more the dissolution rate of the composition (control group) in which allulose and a powdering agent are mixed in a solid state. The upper limit of the dissolution rate may be 10 times or less, 9 times or less, 8 times or less, 7 times or less, 6 times or less, 5 times or less, 3 times or less, 2 times or less, or 1.5 times or less the dissolution rate of the control group.

The dissolution rate may be measured by the time required for 20 g of the sweetener powder composition or the solid mixed composition to be dissolved in 80 g of water. The time required for the powder to be dissolved may be the time required for the powder to dissolve in a solvent and reach a normal state.

The time required for 20 g of the sweetener powder composition according to one embodiment of the invention to dissolve in 80 g of water and reach a constant supernatant concentration may be less than 450 seconds, 440 seconds or less, 430 seconds or less, less than 420 seconds, 410 seconds or less, 400 seconds or less, 350 seconds or less, 300 seconds or less, 290 seconds or less, 280 seconds or less, 270 seconds or less, 260 seconds or less, 250 seconds or less, 240 seconds or less, 200 seconds or less, 150 seconds or less, 100 seconds or less, or 80 seconds or less, and for example it may be 50 to 400 seconds, 50 to 350 seconds, 50 to 300 seconds, 60 to 400 seconds, 60 to 350 seconds, 60 to 300 seconds, 70 to 400 seconds, 70 to 350 seconds, 70 to 300 seconds, 80 to 400 seconds, 80 to 350 seconds, 80 to 300 seconds, 100 to 400 seconds, 100 to 350 seconds, 100 to 300 seconds, 150 to 400 seconds, 150 to 350 seconds, 150 to 300 seconds, 200 to 400 seconds, 200 to 350 seconds, or 200 to 300 seconds.

The dissolution rate of the sweetener powder according to one embodiment of the present disclosure may be more than 1 to 10 times, more than 1 to 9 times, more than 1 to 8 times, more than 1 to 7 times, more than 1 to 6 times, more than 1 to 5 times, more than 1 to 4 times, more than 1 to 3 times, more than 1 to 2 times, more than 1 to 1.8 times, 1.05 to 10 times, 1.05 to 9 times, 1.05 to 8 times, 1.05 to 7 times, 1.05 to 6 times, 1.05 to 5 times, 1.05 to 4 times, 1.05 to 3 times, 1.05 to 2 times, or 1.05 to 1.8 times the dissolution rate of the control group.

The dissolution rate of the mixed saccharide composition according to an embodiment of the present disclosure may be more than 100%, 105% or more, 109% or more, 110% or more, 120% or more, 125% or more, 130% or more, 140% or more, 150% or more, 160% or more, or 170% or more of the dissolution rate of the control group. At this time, the upper limit of the dissolution rate may be 1000% or less, 900% or less, 800% or less, 700% or less, 600% or less, 500% or less, 400% or less, 300% or less, 200% or less, 190% or less, or 180% or less of the dissolution rate of the control group.

The dissolution time of the sweetener powder according to an embodiment of the present disclosure may be less than 100%, 99% or less, 95% or less, 94% or less, 93% or less, 92% or less, 90% or less, 80% or less, 70% or less, 60% or less, 50% or less, 40% or less, 30% or less, or 20% or less relative to the dissolution time of the control group.

At the dissolution rate or the dissolution time, the control group may be a sample in which a powdering agent and allulose crystals contained in the sweetener powder according to an embodiment of the present disclosure are mixed in a solid state, or a sample containing only a powdering agent without containing allulose.

The sweetener powder according to the present disclosure is an amorphous powder, and the crystal particles have a regular arrangement of atoms and a uniform lattice pattern, but the amorphous particles do not have the properties of crystals and refer to a state in which the internal atomic arrangement is irregular and disordered.

The sweetener powder obtained in the present disclosure has 2.0 kcal/g or less. For example, it may be 0.001 to 2.0 kcal/g, and thus may show a calorie of 50% or less based on 100% sugar, which may have very low calories.

The sweetener powder obtained in the present disclosure may have a particle diameter of 10 to 300 µm, 50 to 300 µm, or 50 to 250 µm, for example 150 µm. Further, it is also possible to add a granulation step of the powder obtained by the spray dryer so as to have a larger particle diameter.

The water content of the sweetener powder according to the present disclosure may be 10% by weight or less, or 5% by weight or less.

In the present disclosure, the sweetener powder is a spray-dried product, and may beobtained be obtained by spray-drying a liquid product containing allulose and a powdering agent.
More specifically, the method for preparing a sweetener powder according to the present disclosure which is not part of the present invention may include preparing a liquid product containing allulose and a starch hydrolysate having a glass transition temperature of 60°C to 250°C, or dietary fiber as a powdering agent, and spray-drying the liquid product to prepare a sweetener powder composition.

In the method for preparing a sweetener powder according to the present disclosure which is not part of the present invention, the matters concerning allulose and the powdering agent is as described above.

The spray-drying needs to be performed at a temperature lower than the glass transition temperature of the liquid product. For example, the spray-drying may be performed at a temperature of (Tg of liquid product-3°C) or less, preferably at a temperature of (Tg of liquid product-5°C) or less. Further, the upper limit of the spray-drying temperature may be 100°C. As a specific example, the spray-drying according to the present disclosure may be performed under a temperature condition of 75 to 100°C, preferably 85 to 98°C. The spray-drying temperature may be the temperature inside the spray dryer or the temperature of the outlet air. The spray-drying temperature may be set to a preferable range by adjusting the hot air temperature injected into the spray dryer and the injection speed of the liquid product. The hot air temperature injected into the spray dryer may be appropriately adjusted so as to satisfy the spray-drying temperature condition. For example, it may be in the temperature range of 120 to 200°C. The injection rate of the liquid product injected for spray-drying may be 1 to 50 mL/min, for example, 5 to 10 mL/min.

In the spray-drying according to the present disclosure, a liquid product to be sprayed may be sprayed by various spraying means, such as a disk or a nozzle, and dried by blowing hot air inside a dryer. Examples of atomizers of the spray dryer include a two-fluid nozzle, a pressure nozzle, and a rotary atomizer.

In the present disclosure, the solid content of the raw material liquid product for powdering may be 30 to 80% by weight, preferably 45 to 60% by weight, for example, 55% by weight. The glass transition temperature of the raw material liquid product may be 40 to 150°C, and a DE value may be 10 to less than 44.

The liquid product may further include one or more selected from the group consisting of a high-intensity sweetener and sugar.

In another embodiment of the present disclosure, a food composition comprising the sweetener powder can be provided as defined in the appended claims, and the sweetener powder has an excellent dissolution rate and has an advantage that the sweetness is improved compared to allulose alone, and thus can be used for the same purpose as sugar or sweetener and can be applied to various foods. In one embodiment of the present disclosure, a food composition and a beverage composition to which the sweetener composition is applied can be produced, and it may preferably be added to powdered food and beverage products, and to compositions for preparing these products. As for the food and beverage products, the beverage composition may be applied to a powdered tea product, a coffee product or the like.

The food composition may be one or more selected from the group consisting of ice cream, coffee mix, dairy products, fermented milk, almond milk, creamer, foaming vitamin, powdered drinks, soy milk, tea drinks, hard candies, jellies, gummi, cooky, sweet, milk sweet, pies, biscuits, health functional foods, sports or energy foods, cereals, snack bars, and bakery products, but is not limited thereto.

Specifically, it can be used in general foods with sweetness, such as beverages, candies, ice cream, yogurt, and chocolate. In particular, it can be suitably used as a composition for imparting sweetness in powdered food groups. The content of the sweetener powder in the food composition can be 0.01 to 50% by weight.

### [ADVANTAGEOUS EFFECTS]

The powder composition containing the functional sweetener as defined in the appended claims can easily powder saccharides that are difficult to powder, and provides a sweetener powder composition having a sweetness sensuality improved to have a sweetness degree and sweetness quality similar to sugar. The sweetener powder can be applied to various foods, especially powdered foods and the like.

### [BRIEF DESCRIPTION OF THE DRAWINGS]

FIG. 1 is a graph showing a glass transition temperature (Tg) of the allulose powder according to an embodiment of the present disclosure analyzed by a differential scanning calorimeter (DSC).
FIG. 2 is a graph showing the sweetness profile of sugar and high-intensity sweeteners (sucralose, acesulfame-K).

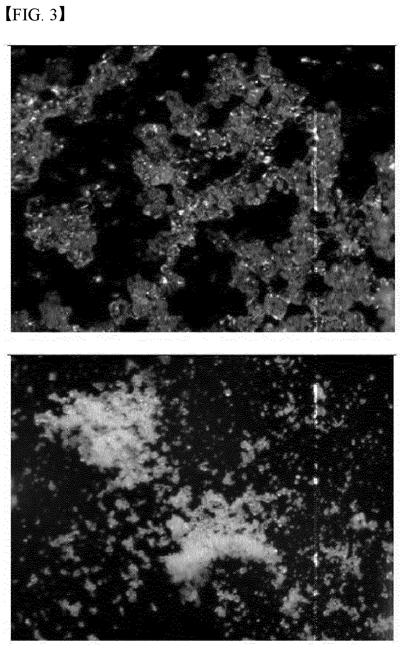

FIG. 3 is a stereomicroscopic particle image (magnification X100) of spray-dried powder according to Example 4.
FIG. 4 is a graph showing the dissolution rate of a sweetener powder composition prepared using indigestible maltodextrin as a powdering agent.
FIG. 5 is a graph showing the dissolution rate of a sweetener powder composition prepared using maltodextrin as a powdering agent.
FIG. 6 is a graph showing the dissolution time of a sweetener powder according to an embodiment of the present disclosure.

### [DETAILED DESCRIPTION OF THE EMBODIMENTS]

Hereinafter, the present disclosure will be described in more detail with the following examples, but the following examples are provided as only preferable examples of the present disclosure.

### Example 1: Preparation of sweetener powder using indigestible maltodextrin

### (1) Preparation of sample

High-purity allulose syrup containing 94% by weight of allulose based on 100% by weight of solid content was diluted to a concentration of 55 Brix and prepared as a sample of Reference Example 1. An indigestible maltodextrin solution (55 Brix) was provided and used as a sample of Reference Example 2. The glass transition temperature of the indigestible maltodextrin was 191.6 °C, and the dietary fiber content was 85% by weight.

Based on 100% by weight of the solid content of the raw material solution for drying process, the high-purity allulose syrup (Reference Example 1) and the indigestible maltodextrin solution (Reference Example 2) were mixed so that a weight ratio of solid content (solid content weight ratio of allulose syrup: weight ratio of the indigestible maltodextrin solution) was 25:75 (Example 1-1), 20:80 (Example 1-2), 17:78 (Example 1-3), and 16.7:83.3 (Example 1-4), and used as a raw material for spray-drying. For Example 1-3, in addition to the indigestible maltodextrin solution and high-purity allulose syrup, sucrose was further added in an amount of 5% by weight to prepare a raw material solution.

The DE (dextrose equivalent) value of the mixed solutions of Examples 1-1 to 1-4 was measured and calculated after diluting with a sample concentration of 10 Brix using a cryoscope device, and the calculated DE values are shown in Table 1 below.

### (2) Preparation of powder by drying

The raw material mixture solutions of Example 1-1, Example 1-2, and Example 1-4 were spray-dried by spraying using a two-fluid nozzle type atomizer (manufactured by GEA Niro, model name: HKC-100-DJ) as a spray dryer, and prearing powder with maintaining the inlet temperature of the hot air at 160 to 180 °C, and the interior tempearture and outlet temperature in the spray dryer at 85 to 100°C.

The raw material mixture solution of Example 1-3 was spray-dried by a multi-stage SD method to prepare a sweetener powder. Specifically, the raw material mixture solution of Example 1-3 was spray-dried in three steps; (1) primary drying in which the mixed solution was sprayed and dried, (2) secondary drying in which the powder was granulated and dried using hot air rising from the bottom of the spray dryer, and (3) third drying and cooling using additional fluidized bed dryer cooler.

### (3) HPLC analysis of sweetener powder

The amount of allulose contained in the prepared powder was analyzed by the following HPLC analysis method, and the analysis conditions are as follows, and the analysis results are shown in Table 1 below.
Analytical column: Biolad carbohydrate column Aminex HPX-87C column
Mobile phase: water
Flow rate: 0.6 ml / min
Column temperature: 80°C
Detector: RI detector

### (4) Results of spray-drying

In Table 1, the mixing ratio of allulose syrup and the mixing ratio of the powdering agent are represented by the solid content of the contained allulose syrup and the solid content of the powdering agent in weight ratio, based on 100% by weight of the sum of the total solid content of the allulose syrup contained in the liquid product to be prepared for powdering and the total solid content of the powdering agent. However, in the case of Example 1-3, the ratio is represented based on 95% by weight of the sum of the solid content of allulose syrup and thesolid content of the powdering agent, with excluding 5% by weight of the additionally contained sucrose.

In Table 1, the allulose solid content refers to the allulose solid content (wt.% ) based on 100% by weight of the solid content of the liquid product to be powered.

The calorie (Kcal) of the sweetener powder shown in Table 1 is a value calculated based on 1 g of the sweetener powder.

**[Table 1]**

| Category | Mixing ratio of allulose syrup (solid content wt.%) | Mixing ratio of powdering agent (solid content wt.%) | Allulose content of dried powder (wt. %) | DE of raw material solution for drying | Calorie of sweetener powder (kcal/g) |
|---|---|---|---|---|---|
| Comparative Example 1 | 35 | 65 | 33 | 44.0 | 1.3 |
| Example 1-1 | 25 | 75 | 23.5 | 35.7 | 1.5 |
| Example 1-2 | 20 | 80 | 18.5 | 30.7 | 1.6 |
| Example 1-3 | 17 | 78 | 15.7 | 30.5 | 1.8 |
| Example 1-4 | 16.7 | 83.3 | 15.5 | 28.5 | 1.7 |
| Reference Example 1 | ** | ** | 94 | - | 0.0 |
| Reference Example 2 | ** | ** | ** | 14.9 | 2.0 |

As a result of spray-drying of Comparative Example 1 and Reference Example 1, when the liquid product was sprayed, water did not evaporate immediately and the liquid product was accumulated on the vessel wall without being dried. In the case of Comparative Example 1, even though indigestible maltodextrin was mixed, the DE value of the mixed liquid product was not adjusted so as to be powdered, so that powdering did not occur.

In the case of Example 1-1, it was greatly affected by the spray-drying process conditions (outlet temperature, feed rate, concentration of raw liquid product to be powdered, etc.), and a dry powder was produced, but the recovery rate was relatively low, showing a recovery rate of about 45%. The recovery rate refers to the weight% of the recovered spray-dried powder based on 100 weight of the solid content of the liquid product. As a result of spray-drying of Example 1-1, it has a lower recovery rate than that of Examples 1-2 to 1-4. The reason is consered that the small diameter of the powder particles makes loss of fine particles, or the raw material adhered to the vessel wat due to the relatively high water content, and the like.

As a result of spray-drying of Examples 1-2 to 1-4, drying was generally well performed to a level that can be recovered as a powder after spraying. Example 1-2 showed a recovery rate of 62%, Example 1-3 showed a recovery rate of 65%, and Example 1-4 showed a recovery rate of 78%. The powder recovery rate of the indigestible maltodextrin of Reference Example 2 was 85%. As a result of spray-drying and powdering the mixture of allulose and indigestible maltodextrin, the powdering operation of Example 1-4 was the easiest, and the recovery rate of the dry powder was also the highest.

It was confirmed that the lower the DE value of the raw spray solution, the better the powdering. When the DE value is high, the recovery rate is low even if powdering is possible, and physical properties such as hygroscopicity, flowability, and water content of the powder may vary. In the multi-stage SD method used in Example 1-3, powdering was performed through two or more drying steps, and as a result, it was dried stably, and the water content and flowability of the powder were further improved.

Therefore, when the solid content of the allulose syrup was less than 35% by weight or the DE value of the raw liquid material for spray-drying was less than 44, based on 100% by weight of solid content of allulose syrup and indigestible maltooligosaccharide, it was found that the powdering was possible.

### Comparative Example 1: Preparation of sweetener powder

A raw material solution for spray-drying was prepared in the same manner as the method using the liquid product of Example 1-1, and spray-dried. However, the high-purity allulose syrup according to Reference Example 1 and the indigestible maltodextrin of Reference Example 2 was mixed at 65:35 of mxing weight ratio of the solid content, to prepare a liquid product for spray-drying and it was spray-dried.

### Example 2: Preparation of sweetener powder using maltodextrin (not within the scope of the present invention)

A maltodextrin solution (55 Brix) was prepared and used as a sample of Reference Example 3. The glass transition temperature of maltodextrin was measured in a powder state and was 141°C. The DE value of maltodextrin was 18.5.

Based on 100% by weight of the solid content of the raw material solution for drying, a high-purity allulose syrup containing 94% by weight of allulose based on 100% by weight of solid content (Reference Example 1), and the maltodextrin (DE18.5) solution of Reference Example 3 were mixed so that the weight ratio of the solid content was 20:80 (Example 2). The DE value of the mixed solution of Example 2 was measured and calculated in the same manner as in Example 1, and the results are shown in Table 2 below.

The raw material solution was spray-dried in substantially the same manner as in the spray-drying method of Example 1-2 to prepare a sweetener powder.

The allulose content of the prepared powder sweetener was analyzed by the same method as the HPLC analysis method of Example 1, and the analysis results are shown in Table 2 below.

**[Table 2]**

| Category | Mixing ratio of allulose syrup (solid content wt.%) | Mixing ratio of powdering agent (solid content wt.%) | Allulose content of dry powder (wt.%) | DE of dry raw material solution | Calories of sweetener powder (kcal/g) |
|---|---|---|---|---|---|
| Example 2 | 20 | 80 | 18.5 | 34.5 | 3.2 |

As a result of spray-drying Example 2 as a raw material, a dry powder was produced, and thus it was confirmed that maltodextrin could be used as a type of powdering agent.

### Example 3: Preparation of sweetener powder using starch syrup (not within the scope of the present invention)

### (1) Preparation of sweetener powder using a mixed raw material of starch syrup and high-purity allulose

A starch syrup solution (55 Brix) was prepared and used as a sample of Reference Example 4. The DE value of the starch syrup solution of Reference Example 4 was 22.

Based on 100% by weight of the solid content, the high-purity allulose syrup of Reference Example 1 and the starch syrup (DE22) solution of Reference Example 4 were mixed so that the weight ratio of the solid content was 18:82 (Example 3-1), and used as a raw material for spray-drying. The DE value of the mixed solution of Example 3-1 was measured and calculated in the same manner as in Example 1, and is shown in Table 3 below. The spray raw material solution was spray dried in substantially the same manner as in the spray-drying method of Example 1-2 to prepare a sweetener powder.

The prepared sweetener powder was analyzed by the same method as the HPLC analysis method of Example 1, and the analysis results are shown in Table 3 below.

### (2) Preparation of sweetener powder using mixed raw materials of starch syrup and low-purity allulose

A sample of Reference Example 5 was prepared by diluting a low-purity allulose syrup (75Brix) containing 14% by weight of allulose based on 100% by weight of solid content, so as to have a concentration of 60 Brix.

Based on 100% by weight of solid content, a low-purity allulose syrup according to Reference Example 5 and starch syrup (DE22) solution of Reference Example 4 were mixed so that the weight ratio of the solid content was 20:80 (Example 3-2), and used as a raw material for spray-drying. The DE value of the mixed solution of Example 3-2 was measured and calculated in the same manner as in Example 1, and is shown in Table 3 below.

The spray raw material solution was spray-dried in substantially the same manner as in the spray-drying method of Example 1-2 to prepare a sweetener powder.

The prepared sweetener powder was analyzed by the same method as the HPLC analysis method of Example 1, and the analysis results are shown in Table 3 below.

**[Table 3]**

| Category | Mixing ratio of allulose syrup (solid content wt.%) | Mixing ratio of powdering agent (solid content wt.%) | Allulose content of dry powder (wt.%) | DE of raw material solution for drying | Calories of sweetener powder (kcal/g) |
|---|---|---|---|---|---|
| Example 3-1 | 18 | 82 | 16.9 | 35.7 | 3.3 |
| Example 3-2 | 20 | 80 | 2.8 | 36 | 3.89 |

As a result of preparing a sweetener powder by spray-drying Example 3-1 or Example 3-2 as a raw material, a dry powder was prepared, and thus it was confirmed that starch syrup can be used as a powdering agent.

### Example 4: Preparation of sweetener powder using maltotetraose syrup

### (1) Preparation of maltotetraose syrup

7000 g of corn starch was mixed with 13000 g of water, and then the mixture was subjected to a high temperature liquefaction reaction at 110°C through a hydroheater, and then passed again through a hydroheater at 130°C to 140°C to deactivate the liquefying enzyme. After that, the temperature was lowered to 61°C through a heat exchanger, and then high-content maltotetraose was hydrolyzed using a heat-resistant a-amylase derived from *Pseudomonas stutzeri,* and heated to 80°C at DE 20 to 22 when the reaction was completed, an activated carbon was added in an amount of 0.1 to 0.8% by weight relative to the solid content, and the mixture was stirred for 30 minutes or more. Thereafter, the activated carbon was removed through a filter press, followed by ion purification and concentration to obtain 9600 g of maltotetraose syrup. The maltotetraose content of the maltotetraose syrup was 46.8% by weight, and 21 of DE value. The prepared maltotetraose syrup was used as a sample of Reference Example 6.

### (2) Preparation of spray raw material

The prepared maltotetraose syrup of Reference Example 6 was divided into six by 1000 g each, and then was mixed with 70Brix allulose syrup containing 96% by weight of allulose. Based on the solid content of the total mixed saccharides, the solid content of allulose increased from Example 4-1 to Example 4-5, and the maltotetraose syrup and the allulose syrup were mixed so as to be the final solid content of allulose in the raw material for spray-dyring at the ratio as shown in Table 4.

**[Table 4]**

| Category | DE of dry raw material | Mixing ratio of allulose syrup (allulose content % in the solid content) | Mixing ratio of maltotetraose syrup (solid content wt.%) |
|---|---|---|---|
| Example 4-1 | 30.1 | 15.4 | 84.6 |
| Example 4-2 | 32.0 | 18.0 | 82.0 |
| Example 4-3 | 33.2 | 20.3 | 79.7 |
| Example 4-4 | 35.1 | 23.0 | 77.0 |
| Example 4-5 | 36.7 | 25.1 | 74.9 |

### (3) Preparation of powder by drying

The raw materials for spray-drying of Examples 4-1 to 4-5 were spray-dried in substantially the same manner as the spray-drying method of Example 1-2 to prepare a sweetener powder.

As a result, the raw material for spray-drying containing 25% by weight of allulose was well powdered. Therefore, when maltotetraose syrup was used as a powdering agent, it was confirmed that even when the allulose content was as relatively high as 25% by weight, powdering could occur well.

### Examples 5 and 6: Preparation of sweetener powder with improved sweetness

To improve the sweetness of sweetener powders, a liquid product solution was prepared in which indigestible maltodextrin powder and allulose syrup were mixed at a weight ratio of 83.3:16.7 according to Example 1-4. Based on 100 parts by weight of the total solid content of solid content of allulose syrup and the indigestible maltodextrin powder of the raw material solution, 0.1 parts by weight of sucralose and 0.133 parts by weight of acesulfame-K were further added to prepare a raw material solution. Spray-drying was performed in substantially the same manner as the spray-drying method of Example 1-4 to prepare a sweetener powder of Example 5.

In the mixed solution of Example 1-4, 5 wt% of the mixing content of the indigestible maltodextrin based on the solid content to prepare a raw material solution was replaced with sugar to prepare raw solution. Based on 100 parts by weight of the total solid content of allulose syrup, indigestible maltodextrin and sugar in the raw material solution, 0.1 parts by weight of sucralose and 0.133 parts by weight of acesulfame-K were further added to prepare a raw material solution, and spray-dried by substantially the same method as the spray-drying method of Example 1-4 to prepare a sweetener powder of Example 6. The mixing ratio based on solid content of the liquid products used in Examples 5 and 6 is shown in Table 3 below. In Table 3 below, the mixing ratio of allulose syrup and indigestible maltodextrin contained in the liquid product represents the solid content of the allulose syrup and the solid content (wt.%) of the indigestible maltodextrin powder based on 100% by weight of the total content of the solid content of the allulose syrup and the solid content of the indigestible maltodextrin powder. The calories of the sweetener powder shown in Table 5 below are set based on the sweetener powder of kcal/g.

**[Table 5]**

| Category | Mixing ratio of allulose syrup (solid content wt.%) | Mixing ratio of indigestible maltodextrin powder (solid content wt.%) | Sugar (wt. %) | sucralose (wt. %) | acesulfame-K (wt.%) | DE of dry raw material | Calorie of sweetener powder (kcal/g) |
|---|---|---|---|---|---|---|---|
| Example 5 | 16.7 | 83.3 | 0 | 0.100 | 0.133 | 28.5 | 1.7 |
| Example 6 | 16.7 | 78.3 | 5.0 | 0.100 | 0.133 | 30.2 | 1.8 |

### Experimental Example 1: Sensory evaluation of sweetener powder

For the sensory evaluation, the powders prepared in Examples 5 and 6 were used as an experimental group, and sugar was used as a control group. Each sample was dissolved to a concentration of 10% Brix and prepared to become the same temperature. 10ml of each sample was collected and provided. It was expressed as a three-digit number randomly extracted using a random number table. The sample presentation order was always randomly determined, and a lukewarm water that could rinse the mouth was provided together to inspectors. The sensory laboratory was maintained at a constant temperature (25±1°C) and no odor.

The sensory inspectors selected 15 panelists who have a high level of understanding of sensory tests and have experience in sensory tests. Training was conducted three times a week for one month, and it took an average of 30 minutes for each training session. As for the content and method of evaluation, the score was evaluated on a scale of 5 points for the intensity of sweet taste, persistence of sweet taste, body taste, and bitter taste of the control group and the experimental group. The criteria of sweet taste intensity was compared with the standard sample sugar 10% solution as 4.5 points. The closer to 1 point, the lighter the body taste, and the closer to 5 points, the heavier the taste was. The results are shown in Table 6.

**[Table 6]**

| Category | Sweet taste | Sweet taste persistence | Body taste | Bitter residual taste |
|---|---|---|---|---|
| Control group | 4.3 | 3.2 | 3.3 | 2.2 |
| Example 6 | 4.2 | 3.6 | 3.0 | 2.7 |

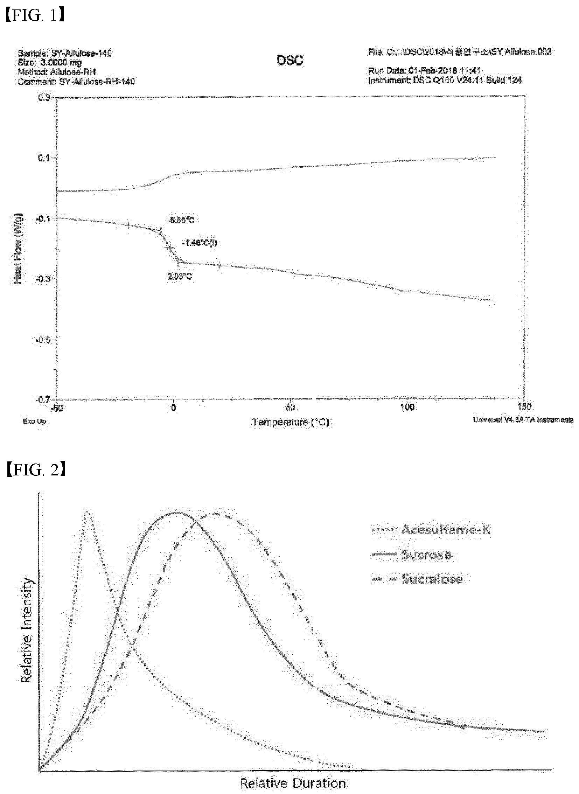

In Example 5, the sweetness degree of the sweet taste was increased, but the characteristic off-taste felt by indigestible maltodextrin remained strongly, whereas in Example 6, the sweet taste of sugar masked the off-taste, and the sweet taste was felt to further increase. Referring to the sweetness profile of sugar, acesulfame-K and sucralose (FIG. 2), the curves of the sweetness profile of acesulfame-K and sucralose have a disagreement with each other. As sugar filled in the sweetness space between the two sweeteners of acesulfame-K and sucralose, the off-taste could be masked.

Therefore, when amorphous powder containing allulose with improved sweetness according to an embodiment of the present disclosure further contains sugar in addition to a high-intensity sweetener, it was confirmed that off-taste can be masked to correct the sweetness level of sugar, and a more desirable sweetener powder can be provided.

### Experimental Example 2: Measurement of glass transition temperature (Tg) of sweetener powder

In order to measure the glass transition temperature value (Tg) of the powder product obtained in Examples 1 to 4, and Example 6, differential scanning calorimetry (DSC) analysis was performed according to the method of ASTM D3418, and the specific DSC analysis conditions are as follows.
Equipment name: DSC[differential scanning calorimetry]
Manufacturer: Perkin Elmer
Method: 30 to 250°C, 10°C/min temperature rise, N₂ gas purge

The DSC analysis results of each of the powders are shown in Table 7 below.

**[Table 7]**

| Category | Tg(°C) |
|---|---|
| Comparative Example 1 | 56.4 |
| Example 1-1 | 71.3 |
| Example 1-2 | 103.2 |
| Example 1-3 | 104.2 |
| Example 1-4 | 131.0 |
| Example 2(not part of present invention) | 62.8 |
| Example 3-1 (not part of present invention) | 79.7 |
| Example 3-2(not part of present invention) | 55.6 |
| Example 4-1 | 61.4 |
| Example 4-2 | 57.1 |
| Example 4-3 | 52.4 |
| Example 4-4 | 49.6 |
| Example 4-5 | 46.3 |
| Example 6 | 105.1 |
| Crystalline allulose | -5.5 |
| Reference Example 2 (indigestible maltodextrin having DE 14.9) | 191.6 |
| Reference Example 3 (maltodextrin having DE18.5) | 141 |
| Reference Example 4 (starch syrup having DE22) | 132 |

The liquid product of Comparative Example 1 was not spray-dried, and measured by the glass transition temperature of the powder obtained by freeze-drying the liquid product. Allulose was measured by the glass transition temperature of crystalline allulose, Reference Example 2 was measured by the glass transition temperature of commercially available indigestible maltodextrin (Samyang Corporation, indigestible maltodextrin, DE 14.9, dietary fiber content 85%),and Reference Example 3 and Reference Example 4 were measured by pulverizing commercially available maltodextrin (Samyang Corporation., Genedex) and commercially available starch syrup (Samyang Corporation, low-intensity starch syrup) at the glass transition temperature.

As a result of the DSC analysis, by mixing the allulose syrup and the powdering agent, it was confirmed that the glass transition temperature of the powdered raw material solution reached a level that can be powderized by spray-drying.

### Experimental Example 3: Measurement of solubility

### (1) Confirmation of increase in dissolution rate by powdering

In order to confirm the solubility of the amorphous powder prepared by spray-drying method, the dissolution rate of the spray-dried sweetener powder according to the present disclosure was compared with that of a sample (Comparative Example 2 and Comparative Example 3) in which the spray-dried sweetener powder was physically mixed in a solid state while having the same component ratio. Specifically, a sample in which indigestible maltodextrin and allulose crystals were physically mixed in a solid phase at a weight ratio of 75:25 was used as Comparative Example 2, and a sample obtained by physically mixing maltodextrin (DE18) and allulose crystals in a solid phase at a weight ratio of 80:20 was used as Comparative Example 3.

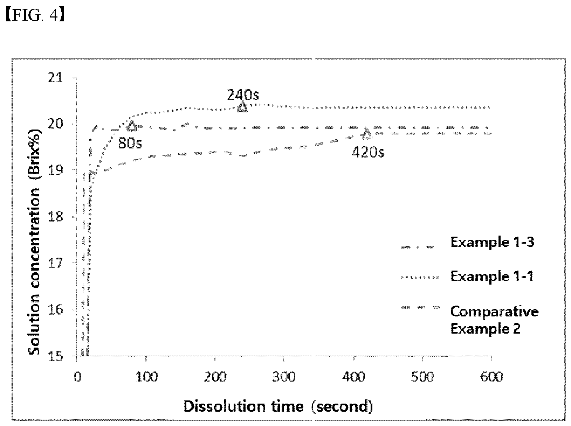

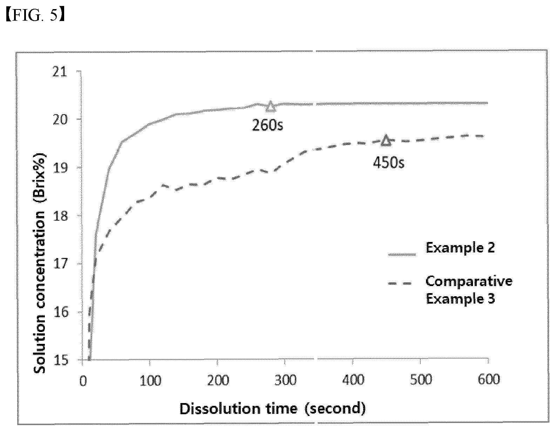

Specifically, using the same beaker and magnetic bar, 20g of the powder was completely dissolved in 80g of water at the same stirring speed at room temperature, and the time required for 20 g of the powder be completely dissolved (i.e., the dissolution rate) was measured. The results are shown in FIG. 4, FIG. 5, and Table 8. In Table 8, the dissolution time compared to Comparative Example is a relative dissolution time shown based on the dissolution rate of 100% of Comparative Example 2 (for Example 1-1 and Example 1-3) or Comparative Example 3 (for Example 2 which is not part of the present invention), and a smaller value means a faster dissolution rate compared to the control group. Specifically, all the samples showed excellent dissolution rates compared to Comparative Example 2 or Comparative Example 3, and in particular, the samples of Examples 1-3 showed the fastest dissolution rate.

**[Table 8]**

| | Allulose mixing ratio (wt. %) | Powdering agent mixing ratio (wt.%) | Dissolution time (sec) | Dissolution time compared to Comparative Example |
|---|---|---|---|---|
| Example 1-1 | 25 | 75 | 240 | 57.14% |
| Example 1-3 | 17 | 78 | 80 | 19.05% |
| Comparative Example 2 | 25 | 75 | 420 | 100% |
| Example 2 (not part of present invention) | 20 | 80 | 260 | 57.78% |
| Comparative Example 3 | 20 | 80 | 450 | 100% |

As a result, it was confirmed that the dissolution rate of the sweetener powder composition according to an example of the present disclosure was significantly 1.5 times faster than that of Comparative Examples 2 and 3 in which the powder was simply physically mixed in a solid state. In the case of Example 1-3 prepared by the multi-stage SD method, voids were generated between the powder particles due to aggregation between the powder particles, and the dispersibility of the powder was better than that of the single method, and thus the dissolution rate was 5 times faster than that of Comparative Example 2 or Comparative Example 3.

### (2) Increased dissolution rate by combination of allulose and powdering agent

In order to confirm the solubility of the sweetener powder containing allulose, the dissolution rate of the maltooligosaccharide (maltotetraose) and allulose mixed powder sweetener of Example 4 was compared with that of the maltooligosaccharide (maltotetraose) powder of Reference Example 6.

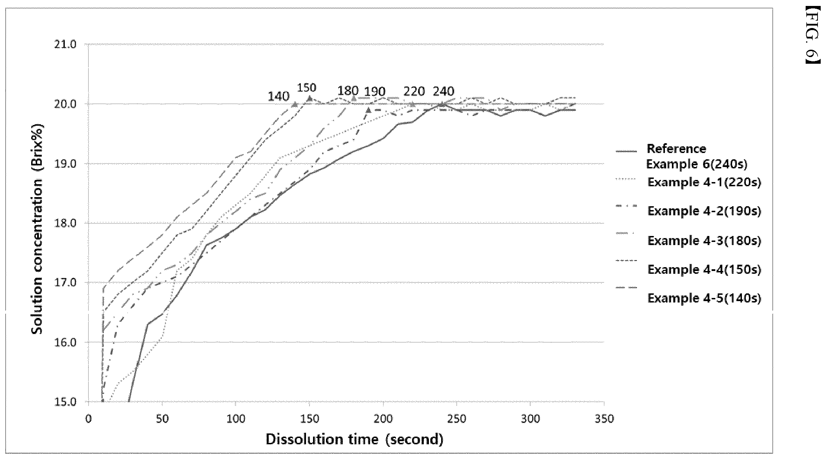

Specifically, using the same beaker and magnetic bar, 20 g of the powder was completely dissolved in 80g of water at the same stirring speed at room temperature, and the time required to reach a constant supernatant concentration (i.e., dissolution rate) was measured and shown in Table 9 and FIG. 6. As a result, it was confirmed that the sweetener powder containing allulose according to Examples of the present disclosure had a faster dissolution rate than the maltooligosaccharide powder. In Table 8, the dissolution time compared to Reference Example 6 is a relative dissolution time showing the dissolution rate of the maltooligosaccharide powder of Reference Example 6 based on 100%, and as the value is smaller, the dissolution rate is faster compared to the control group.

**[Table 9]**

| | Dissolution time (sec) | Dissolution time relative to Reference Example 6 |
|---|---|---|
| Example 4-1 | 220 | 91.7% |
| Example 4-2 | 190 | 86.4% |
| Example 4-3 | 180 | 75.0% |
| Example 4-4 | 150 | 62.5% |
| Example 4-5 | 140 | 58.3% |
| Reference Example 6 | 240 | 100.0% |

## Claims

1. A sweetener powder composition comprising allulose and a powdering agent, wherein the powdering agent has a glass transition temperature of 60°C to 250°C in a powder state, and wherein the sweetener powder composition has a glass transition temperature of 40 to 150°C,
wherein the powdering agent is starch hydrolysate, or dietary fiber,
wherein the sweetener powder has a caloric energy of 2.0 kcal/g or less,
wherein the powder is a spray-dried product.

2. The sweetener powder composition according to claim 1, wherein the sweetener powder is an amorphous powder.

3. The sweetener powder composition according to claim 1, wherein the sweetener powder composition has a dextrose equivalent (DE) value of 10 to less than 44.

4. The sweetener powder composition according to claim 1, wherein the powdering agent is one or more selected from the group consisting of dietary fiber, dextrin, maltooligosaccharide, maltotetraose syrup, and starch syrup.

5. The sweetener powder composition according to claim 1, wherein the powdering agent is indigestible maltodextrin, or starch syrup, wherein the starch syrup has DE value 25 or less.

6. The sweetener powder composition according to claim 1, wherein the sweetener powder has a water content of 10% by weight or less.

7. The sweetener powder composition according to claim 1, wherein the sweetener powder composition comprises 1 or higher to less than 35% by weight of the allulose and more than 65 to 99% or higher by weight of the powdering agent, based on 100% by weight of the total solid content of the allulose and the powdering agent.

8. The sweetener powder composition according to claim 1, wherein the dissolution rate of the sweetener powder composition is less than 100% of the dissolution rate of the powder composition obtained by solid-phase mixing a crystalline allulose and the powdering agent.

9. A composition for preparing the sweetener powder according to any one of claims 1 to 8, comprising an allulose syrup and a liquid powdering agent, wherein the composition for preparing the sweetener powder has a dextrose equivalent value of less than 44.

10. A food composition comprising the sweetener powder composition according to any one of claims 1 to 8.

## Patentansprüche

1. Süßungsmittelpulverzusammensetzung, die Allulose und ein Pulverungsmittel umfasst, wobei das Pulverungsmittel in einem Pulverzustand eine Glasübergangstemperatur von 60 °C bis 250 °C aufweist und wobei die Süßungsmittelpulverzusammensetzung eine Glasübergangstemperatur von 40 °C bis 150 °C aufweist,
wobei das Pulverungsmittel ein Stärkehydrolysat oder ein Ballaststoff ist,
wobei das Süßungsmittelpulver eine kalorische Energie von 2,0 kcal/g oder weniger aufweist,
wobei das Pulver ein sprühgetrocknetes Produkt ist.

2. Süßungsmittelpulverzusammensetzung gemäß Anspruch 1, wobei das Süßungsmittelpulver ein amorphes Pulver ist.

3. Süßungsmittelpulverzusammensetzung gemäß Anspruch 1, wobei die Süßungsmittelpulverzusammensetzung einen Dextroseäquivalent(DE)-Wert von 10 bis weniger als 44 aufweist.

4. Süßungsmittelpulverzusammensetzung gemäß Anspruch 1, wobei das Pulverungsmittel eines oder mehrere ist bzw. sind, das bzw. die aus der Gruppe ausgewählt ist bzw. sind, die aus Ballaststoffen, Dextrin, Maltooligosacchariden, Maltotetraosesirup und Stärkesirup besteht.

5. Süßungsmittelpulverzusammensetzung gemäß Anspruch 1, wobei das Pulverungsmittel unverdauliches Maltodextrin oder Stärkesirup ist, wobei der Stärkesirup einen DE-Wert von 25 oder weniger aufweist.

6. Süßungsmittelpulverzusammensetzung gemäß Anspruch 1, wobei das Süßungsmittelpulver einen Wassergehalt von 10 Gew.-% oder weniger aufweist.

7. Süßungsmittelpulverzusammensetzung gemäß Anspruch 1, wobei die Süßungsmittelpulverzusammensetzung 1 Gew.-% oder mehr bis weniger als 35 Gew.-% der Allulose und mehr als 65 Gew.-% bis 99 Gew.-% oder mehr des Pulverungsmittels, bezogen auf 100 Gew.-% des Gesamtfeststoffgehalts der Allulose und des Pulverungsmittels, umfasst.

8. Süßungsmittelpulverzusammensetzung gemäß Anspruch 1, wobei die Auflösungsgeschwindigkeit der Süßungsmittelpulverzusammensetzung weniger als 100 % der Auflösungsgeschwindigkeit einer Pulverzusammensetzung, welche durch Festphasenmischen einer kristallinen Allulose und des Pulverungsmittels erhaltenen wird, beträgt.

9. Zusammensetzung zur Herstellung des Süßungsmittelpulvers gemäß einem der Ansprüche 1 bis 8, die einen Allulosesirup und ein flüssiges Pulverungsmittel umfasst, wobei die Zusammensetzung zur Herstellung des Süßungsmittelpulvers einen Dextroseäquivalent-Wert von weniger als 44 aufweist.

10. Lebensmittelzusammensetzung, die die Süßungsmittelpulverzusammensetzung gemäß einem der Ansprüche 1 bis 8 umfasst.

## Revendications

1. Composition de poudre édulcorante, comprenant de l'allulose et un agent en poudre, l'agent en poudre présentant une température de transition vitreuse de 60 °C à 250 °C à l'état de poudre et la température de transition vitreuse de la composition de poudre édulcorante étant de 40 °C à 150 °C,
l'agent en poudre étant un hydrolysat d'amidon ou une fibre alimentaire,
la poudre édulcorante présentant une énergie calorique de 2,0 kcal/g ou moins,
la poudre étant un produit séché par pulvérisation.

2. Composition de poudre édulcorante selon la revendication 1, dans laquelle la poudre édulcorante est une poudre amorphe.

3. Composition de poudre édulcorante selon la revendication 1, dans laquelle la composition de poudre édulcorante présente une valeur d'équivalent dextrose (DE) de 10 à moins de 44.

4. Composition de poudre édulcorante selon la revendication 1, dans laquelle l'agent en poudre est un ou plusieurs éléments sélectionnés dans le groupe constitué de fibres alimentaires, de dextrine, de maltooligosaccharides, de sirop de maltotétraose et de sirop d'amidon.

5. Composition de poudre édulcorante selon la revendication 1, dans laquelle l'agent en poudre est de la maltodextrine non digestible ou du sirop d'amidon, le sirop d'amidon présentant une valeur DE de 25 ou moins.

6. Composition de poudre édulcorante selon la revendication 1, dans laquelle la poudre édulcorante présente une teneur en eau de 10 % en poids ou moins.

7. Composition de poudre édulcorante selon la revendication 1, dans laquelle la composition de poudre édulcorante comprend de 1 % en poids ou plus à moins de 35 % en poids d'allulose et plus de 65 % en poids à 99 % en poids ou plus de l'agent en poudre, par rapport à 100 % en poids de la teneur totale en matières solides de l'allulose et de l'agent en poudre.

8. Composition de poudre édulcorante selon la revendication 1, dans laquelle la vitesse de dissolution de la composition de poudre édulcorante est inférieure à 100 % de la vitesse de dissolution de la composition de poudre obtenue par mélange en phase solide d'allulose cristalline et de l'agent en poudre.

9. Composition pour la fabrication de la poudre édulcorante selon l'une quelconque des revendications 1 à 8, comprenant un sirop d'allulose et un agent en poudre liquide, la composition pour la fabrication de la poudre édulcorante présentant une valeur d'équivalent dextrose inférieure à 44.

10. Composition alimentaire, comprenant la composition de poudre édulcorante selon l'une quelconque des revendications 1 à 8.
